(19) Europäisches Patentamt
European Patent Office
Office européen des brevets

(11) **EP 4 047 230 B1**

(12) **EUROPEAN PATENT SPECIFICATION**

(45) Date of publication and mention
of the grant of the patent:
**22.04.2026 Bulletin 2026/17**

(21) Application number: **22156027.9**

(22) Date of filing: **10.02.2022**

(51) International Patent Classification (IPC):
**F16C 23/04** *(2006.01)* **F16C 23/08** *(2006.01)*
**F16C 35/02** *(2006.01)* **F16C 35/04** *(2006.01)*

(52) Cooperative Patent Classification (CPC):
**F16C 23/043; F16C 23/084; F16C 35/02;**
**F16C 35/047;** F16C 2208/00; F16C 2300/40

(54) **CASING REINFORCED WITH RIBS FOR FOOD APPLICATIONS**

MIT RIPPEN VERSTÄRKTES GEHÄUSE FÜR LEBENSMITTELANWENDUNGEN

BOÎTIER RENFORCÉ PAR DES NERVURES POUR DES APPLICATIONS ALIMENTAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.02.2021 IT 202100003815**

(43) Date of publication of application:
**24.08.2022 Bulletin 2022/34**

(73) Proprietor: **Aktiebolaget SKF**
**415 50 Göteborg (SE)**

(72) Inventors:
• **Bertelloni, Ettore**
**54100 Massa (IT)**
• **Bertolini, Andrea A**
**54033 Carrara (IT)**
• **Frezza, Pasquale**
**81031 Aversa (CE) (IT)**

(74) Representative: **Kohl, Thomas**
**SKF GmbH**
**Gunnar-Wester-Strasse 12**
**97421 Schweinfurt (DE)**

(56) References cited:
**US-A- 5 433 530 US-A1- 2003 095 732**

**Description**

Technical Field of the Invention

The present invention relates to a reinforced casing for food applications, in particular a casing for a rotary shaft and associated bearing unit secured to a machine framework. More particularly, the reinforcement renders the casing able to withstand greater loads, in other words it prolongs the service life of the casing.

Prior art

As is known, in the food and beverages (or simply F&B) industry, there is increasing focus on the development of new machines and machine designs aimed at improving the safety and quality of foodstuffs.

A typical component for such applications is a casing, generally, but not exclusively, made of composite polymeric material, compatible with food applications. The casing has a spherical seat which houses internally a bearing unit (in the F&B sector, usually referred to as Y-bearing units or insert bearings), which in turn allows rotation of a rotary shaft of a machine with respect to the casing which is itself a static component, secured to the framework of the machine.

In general, the design strength of the casing is equal to the allowable load on the bearing unit: commercial bearing unit catalogues usually state a load value $C_0$ expressed in newtons which represents the design strength of the bearing unit.

However, it often happens that the end user in food applications does not adhere to the load values stated. Moreover, frequently, especially during transport, there are spurious loads, of unpredictable magnitude, which place strain on the casing and often cause it to break.

Moreover, under working conditions, whether in use at the end customer or during testing by the applicant, mechanical failure of the casing has been observed even with a load below the static design load $C_0$. Critical points have been observed on the base of the casing, between the hole for the bolts and the seat of the bearing unit. In particular, it turns out that the most critical area is the point of connection between the base and the seat of the bearing unit. In this area, the tensions present have propagated, and have damaged the whole seat of the bearing unit.

US 5 433 530 A discloses a casing according to the preamble of claim 1.

US 2003/095732 A1 also discloses a similar casing.

It is therefore necessary to define a reinforced casing with a design solution that can overcome or at least mitigate the abovementioned drawbacks.

Summary of the Invention

To substantially solve the technical problems set forth above, one aim of the present invention is to define a reinforced casing for food applications, in particular a casing for a rotary shaft and associated bearing unit secured to a machine framework.

To this end, according to one aspect of the present invention, a solution has been developed and implemented whereby the casing, always made of composite polymeric material, comprises at least one rib, or a plurality of ribs for reinforcement.

According to a preferred embodiment of the invention, there are two pairs of ribs distributed respectively between a hole of the pair of holes for the fixing bolts and the spherical seat of the bearing unit, each pair of ribs placed on the opposite side with respect to the spherical seat of the bearing unit.

Better performance is thus obtained, with an increase in the allowable radial breaking and shear load, avoiding the creation of localized weak areas and points of high stress, from which cracks can propagate, leading to breakage of the casing.

With the implementation of the ribs, in the area exposed to the highest stresses, tension is made more uniform and reduced in absolute terms. Therefore, the stressing of the material is kept below the yield and breakage point. This gives the casing excellent strength, both in the plane passing through the axes of the bolts and in the direction orthogonal to said plane.

Therefore, the present invention provides a reinforced casing for food applications having the features defined in the independent claim attached to this description.

Further embodiments of the invention, which are preferred and/or particularly advantageous, are described according to the features defined in the attached dependent claims.

Brief Description of the Drawings

The invention will now be described with reference to the attached drawing, which illustrates a non-limiting embodiment of the invention, in which:

- Figure 1 is a cross section through a reinforced casing for food applications, according to an embodiment of the present invention,
- Figure 2 is a detail of the perspective view of the casing of Figure 1 showing a pair of reinforcing ribs with some characteristic dimensions thereof, and
- Figure 3 is another detail in plan view of the casing of Figure 1 showing further characteristic dimensions defining the pair of reinforcing ribs.

Detailed Description

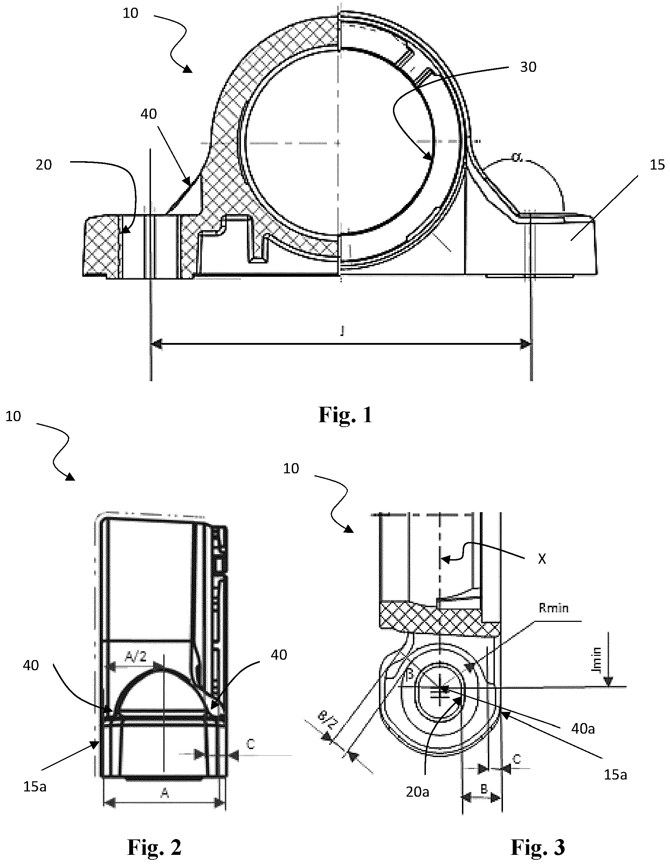

Purely by way of non-limiting example and with reference to Figure 1, the present invention will now be described: a reinforced casing 10 for food applications is made of composite polymeric material. The casing 10 comprises, in its base 15, a pair of holes 20, the spacing between their axes being designated J, for housing fixing bolts (not shown) for fixing to the framework of a machine, and a spherical seat 30 for housing a bearing unit (of known type and therefore not depicted in the figure).

According to the invention, the casing also has at least one rib 40 or a plurality of ribs 40 for reinforcement. For example, in the casing 10 of Figure 1, there are two pairs of ribs 40 located, also with reference to Figure 2, respectively between a hole of the pair of holes 20 for the fixing bolts and the spherical seat 30 of the bearing unit, each pair of ribs 40 placed on the opposite side with respect to the spherical seat 30 of the bearing unit.

In the present description, the reference sign 20 will be used for the single hole and for the pair of holes, while the reference sign 40 will be used for the single rib, for the pair of ribs and also for the plurality of ribs.

Furthermore, the present description will refer below to the casing of Figure 1, but, as will be seen, the essence of the invention is also applicable to casings of different shape.

More particularly, this new solution for the casing provides for all of the ribs of the pairs of ribs 40 to have a rounded shape around the edge of the pair of holes 20 for the fixing bolts. The pairs of ribs 40 make the casing 10 stronger, ensuring better performance in terms of breakage when subjected to stress, whether shear or tensile stress. In particular, the pairs of ribs 40 succeed in distributing the highest tensions over a greater surface area, while at the same time reducing the highest absolute values thereof.

Structural analyses performed on the finished products have shown that, in fact, the tensile peaks are reduced and the load lines are no longer localized but are distributed over the entire base 15 of the casing 10.

To be specific, again on the basis of the structural analyses performed by the Applicant, it was possible to compare the distribution of loads on a casing according to the prior art, and hence without ribs, and a casing having pairs of ribs according to the present invention.

In the first case - casing without ribs - the load acts on the portion of the casing where the spherical seat of the bearing unit is made, i.e. at a certain height from the base of the casing, creating a shear stress and moment on said base. This means that there is a zone under high load in the entire area of the base between the pair of holes for the bolts and the seat of the bearing unit, this zone causing rapid breakage of the casing.

In the second case - casing 10 with the pairs of ribs 40 according to the invention - the load lines and tensions shift from the ribs to the base, in the vicinity of the holes for the bolts. This means that there are fewer stresses distributed and a smaller load area, harmonizing stresses and reducing the stress peak. To be specific, whereas in the case of the prior art casing the stress peak was substantially equal to the breakage load, in the case of the casing 10 with the pairs of ribs 40, the maximum stress value is reduced and lies well below the yield load.

Also with reference to Figures 2 and 3, note that the excellent results obtained through the use of the pairs of ribs 40 are linked to precise design specifications that must take account, on the one hand, of the desired structural strengthening and, on the other hand, of the technological and assembly constraints of the casing 10 and hence its characteristic dimensions. In particular, the dimensions of the casing 10 that matter are the spacing J between the centers of the pair of holes 20 and the width A of the base 15. On the basis of the values of these dimensions, it is possible to define the main dimensions that make it possible to produce the pair of ribs 40.

In particular, the definition of the width A of the base 15 makes it possible to identify a position of the pairs of ribs 40 such that the curvature is as symmetrical as possible with respect to the axis of the pair of holes 20, or such that the axis of symmetry X of the two pairs of ribs 40 coincides with the axis of the pair of holes 20 and is aligned with the mid-plane of the spherical seat 30 in which the bearing unit is mounted. Therefore, the distance of the axis of symmetry X from a wall 15a of the base 15 must be equal to A/2

The production of the two pairs of ribs 40 thus defines a minimum spacing between the centers of symmetry 40a of each pair of ribs and this spacing Jmin must be:

$$Jmin > J - 2 \ mm$$

Moreover, using a polar coordinate system, the characteristic dimensions for machining the two pairs of ribs 40 are a minimum radius Rmin, defined as the distance from the center of symmetry 40a of the single rib 40, and two angles $\alpha$ and $\beta$, in a plane orthogonal to the base 15 and in a plane parallel to the base 15, respectively. The minimum radius Rmin must be as small as possible to as to define a maximum strong section of each rib but at the same time must allow insertion of the key for tightening the bolts and must not reduce the surface area for bearing of the heads of the bolts. With $\Phi$ as the diameter of the bolts, the following must therefore hold:

$$Rmin > \Phi + 0.8 \ mm$$

The angle $\alpha$ defines the average inclination of the two pairs of ribs with respect to the base 15 and ranges between 120° and 140°, while the angle $\beta$ defines, in a plane parallel to the base 15, the average inclination of the two pairs of ribs 40 with respect to the axis of symmetry X and may range between 40° and 50°.

The dimension B, the distance between a wall 20a of the holes 20 and a wall 15a of the base 15, on the other hand, is used to define a section C of the ribs 40, more precisely the width of the lower base of the ribs available on the base 15 of the casing 10 and ensure its curvature such that it does not hamper the tightening of the bolts. Therefore, the width of the lower base of the ribs must be:

$$C > B/2 - 0.8 \text{ mm}$$

Lastly, in the two pairs of ribs 40, all the parts with curve radii have a radius of between 0.8 mm and 2 mm.

The solution consisting of the reinforced casing with the plurality of ribs, in addition to the casing described above which requires two pairs of ribs, may be applied to all the various existing types of casings for food applications, in which if the number of holes for the fixing bolts is greater than two, it is simply necessary to change the number of the plurality of ribs. In particular:

- Square flange casings
- Oval flange casings
- Flanged casings with three bolts
- Casing with upright support
- Casing with upright support and short base

as well as other types.

The main advantages of the invention make it possible to keep a competitive edge over the competition, providing a new casing solution for bearing units that is extremely strong and robust. In particular, it affords:

- better distribution of tensions,
- smaller stress peak for the same applied load, i.e. the possibility of withstanding higher loads.

In addition to the embodiment of the invention as described above, note that it encompasses many other variants within the scope of the appended claims.

**Claims**

1. Casing (10) of bearing units for food applications, made of composite polymeric material and comprising:

   - a base (15) in turn comprising at least one hole (20) for housing fixing bolts and corresponding fixing bolts, and
   - a spherical seat (30) for housing the bearing unit,

   wherein the casing (10) includes at least one reinforcement rib (40) located between the hole (20) and the spherical seat (30),

   wherein the holes (20) are two in number and the at least one reinforcing rib (40) consists of two pairs of ribs (40) located respectively between a hole (20) of the pair of holes and the spherical seat (30), each pair of ribs (40) placed on the opposite side with respect to the spherical seat (30,
the casing (10) being **characterized, in** combination, **in that**:

   - the ribs of the pairs of ribs (40) have a rounded shape around the edge of the pair of holes (20),
   - the distance of an axis of symmetry (X) of the two pairs of ribs (40) from a wall (15a) of the base (15) is equal to half the width (A) of the base (15) of the housing (10), **characterized in that**
   - a minimum spacing (Jmin) between the centers of symmetry (40a) of each pair of ribs (40) is:

$$J\min > J - 2 \text{ mm}$$

   where J is the distance between the axes of the pair of holes (20),
   - a minimum radius (Rmin), distance of the rib (40) from the center of symmetry (40a) results:

$$R\min > \Phi + 0.8 \text{ mm}$$

   where $\Phi$ is the diameter of the fixing bolts,
   - an angle ($\alpha$), measured on a plane orthogonal to the base (15), of the average inclination of the rib (40) with respect to the base (15) ranges between 120° and 140°, and
   - the width (C) of the lower base of the rib (40) is:

$$C > B / 2 - 0.8 \text{ mm}$$

   where B is the distance between a wall (20a) of the holes (20) and the wall (15a) of the base (15).

2. Casing (10) according to claim 1, **characterized in that** an angle ($\beta$), measured on a plane parallel to the base (15), of the average inclination of the rib (40) with respect to the axis of symmetry (X) ranges between 40° and 50°.

3. Casing (10) according to any of the preceding claims, **characterized in that** the rib (40) comprises rounded surfaces with a radius between 0.8 mm and 2 mm.

**Patentansprüche**

1. Gehäuse (10) von Lagereinheiten für Lebensmittelanwendungen, das aus polymerem Verbundmaterial hergestellt ist und Folgendes umfasst:

   - eine Basis (15), die jeweils mindestens ein Loch (20) zur Aufnahme von Befestigungsschrauben sowie entsprechende Befestigungsschrauben umfasst, und
   - einen kugelförmigen Sitz (30) zur Aufnahme der Lagereinheit,
   wobei das Gehäuse (10) mindestens eine Verstärkungsrippe (40) aufweist, die sich zwischen dem Loch (20) und dem kugelförmigen Sitz (30) befindet,
   wobei die Anzahl der Löcher (20) zwei beträgt und die mindestens eine Verstärkungsrippe (40) aus zwei Paar Rippen (40) besteht, die jeweils zwischen einem Loch (20) des Paars Löcher und dem kugelförmigen Sitz (30) angeordnet sind, wobei jedes Paar Rippen (40) an der gegenüberliegenden Seite in Bezug auf den kugelförmigen Sitz (30) platziert ist,
   wobei das Gehäuse (10) in Kombination **dadurch gekennzeichnet ist, dass**:

   - die Rippen der Paare Rippen (40) eine abgerundete Form um den Rand des Paars Löcher (20) haben,
   - der Abstand einer Symmetrieachse (X) der beiden Paare Rippen (40) von einer Wand (15a) der Basis (15) gleich der halben Breite (A) der Basis (15) des Gehäuses (10) ist, **dadurch gekennzeichnet, dass**
   - ein Mindestabstand (Jmin) zwischen den Symmetriezentren (40a) jedes Paars Rippen (40) Folgendes beträgt:

   $$Jmin > J - 2 \text{ mm,}$$

   wobei J der Abstand zwischen den Achsen des Paars Löcher (20) ist,
   - ein minimaler Radius (Rmin), der Abstand der Rippe (40) vom Symmetriezentrum (40a) Folgendes ergibt:

   $$Rmin > \Phi + 0,8 \text{ mm,}$$

   wobei Φ der Durchmesser der Befestigungsschrauben ist,
   - ein auf einer zu der Basis (15) orthogonalen Ebene gemessener Winkel (α) der mittleren Neigung der Rippe (40) bezüglich der Basis (15) zwischen 120° und 140° liegt und
   - die Breite (C) der unteren Basis der Rippe (40) Folgendes beträgt:

   $$C > B / 2 - 0,8 \text{ mm,}$$

   wobei B der Abstand zwischen einer Wand (20a) der Löcher (20) und der Wand (15a) der Basis (15) ist.

2. Gehäuse (10) nach Anspruch 1, **dadurch gekennzeichnet, dass** ein auf einer zu der Basis (15) parallelen Ebene gemessener Winkel (β) der mittleren Neigung der Rippe (40) bezüglich der Symmetrieachse (X) zwischen 40° und 50° liegt.

3. Gehäuse (10) nach einem der vorhergehenden Ansprüche, **dadurch gekennzeichnet, dass** die Rippe (40) abgerundete Flächen mit einem Radius zwischen 0,8 mm und 2 mm aufweist.

**Revendications**

1. Carter (10) de paliers pour applications alimentaires, réalisé en matériau polymère composite et comportant :

   - une base (15) comprenant quant à elle au moins un trou (20) destiné à recevoir des boulons de fixation et des boulons de fixation correspondants, et
   - un siège sphérique (30) destiné à recevoir le palier,
   le carter (10) comprenant au moins une nervure de renforcement (40) située entre le trou (20) et le siège sphérique (30),
   les trous (20) étant au nombre de deux et l'au moins une nervure de renforcement (40) étant constituée de deux paires de nervures (40) situées respectivement entre un trou (20) de la paire de trous et le siège sphérique (30), chaque paire de nervures (40) étant placée sur le côté opposé par rapport au siège sphérique (30,
   le carter (10) étant caractérisé, en combinaison, en ce que :

   - les nervures des paires de nervures (40) sont de forme arrondie autour du bord de la paire de trous (20),
   - la distance d'un axe de symétrie (X) des deux paires de nervures (40) à une paroi (15a) de la base (15) est égale à la moitié de la largeur (A) de la base (15) du carter (10), **caractérisé en ce que**
   - un espacement minimum (Jmin) entre les centres de symétrie (40a) de chaque paire de nervures (40) est :

   $$Jmin > J - 2 \text{ mm}$$

où J est la distance entre les axes de la paire de trous (20),
- un rayon minimum (Rmin), distance de la nervure (40) au centre de symétrie (40a) est par conséquent :

```
Rmin > Φ + 0,8 mm
```

où Φ est le diamètre des boulons de fixation,
- un angle (α), mesuré sur un plan orthogonal à la base (15), de l'inclinaison moyenne de la nervure (40) par rapport à la base (15) est compris entre 120° et 140°, et
- la largeur (C) de la base inférieure de la nervure (40) est :

```
C > B / 2 - 0,8 mm
```

où B est la distance entre une paroi (20a) des trous (20) et la paroi (15a) de la base (15).

2. Carter (10) selon la revendication 1, **caractérisé en ce qu'**un angle (β), mesuré sur un plan parallèle à la base (15), de l'inclinaison moyenne de la nervure (40) par rapport à l'axe de symétrie (X) est compris entre 40° et 50°.

3. Carter (10) selon l'une quelconque des revendications précédentes, **caractérisé en ce que** la nervure (40) comprend des surfaces arrondies présentant un rayon compris entre 0,8 mm et 2 mm.

**Fig. 1**

**Fig. 2**

**Fig. 3**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5433530 A
- US 2003095732 A1